# FASCICULE DE BREVET EUROPEEN

(11) **EP 0 669 237 B1**
(45) Date de publication et mention de la délivrance du brevet: **23.09.1998**
(21) Numéro de dépôt: 95102072.6
(22) Date de dépôt: 15.02.1995
(51) Int. Cl.: B60S 1/34, F16D 1/06

(54) **Dispositif d'essuie-glace comportant des moyens perfectionnés d'accouplement entre l'arbre moteur et la tête d'entraînement**
Scheibenwischer mit verbesserten Verbindungsmitteln zwischen der Antriebswelle und dem Befestigungsteil
Windscreen wiper with improved coupling means between the drive shaft and the wiper arm linking piece

(30) Priorité: 28.02.1994 FR 9402240
(43) Date de publication de la demande: 30.08.1995
(73) Titulaire: VALEO SYSTEMES D'ESSUYAGE, 78321 La Verrière (FR)
(72) Inventeur: Berge, Gilles, F-78120 Clairefontaine/Yvelines (FR); Princet, Joel, F-86100 Chatellerault (FR); Eustache, Jean-Pierre, F-92160 Antony (FR); Bouy, Gilbert, F-86100 Chatellerault (FR)
(74) Mandataire: Gamonal, Didier

(56) Documents cités:
- EP-A- 0 491 603
- FR-A- 2 692 536
- GB-A- 644 595
- US-A- 2 799 039
- US-A- 3 429 597
- PATENT ABSTRACTS OF JAPAN vol. 9 no. 231 (M-414) ,18 Septembre 1985 & JP-A-60 088663 (NIPPON DENSO) 18 Mai 1985,

## Description

La présente invention concerne un dispositif d'essuie-glace.

L'invention concerne plus particulièrement un dispositif du type comportant un arbre moteur rotatif et une tête d'entraînement sur laquelle est articulé un bras d'essuie-glace, et du type comportant des moyens d'accouplement entre la tête d'entraînement et l'extrémité libre de l'arbre moteur, qui est reçue dans un logement formé dans la tête d'entraînement, qui comportent des moyens de liaison en rotation par coopération de formes et des moyens de serrage axial comportant un ensemble du type vis-écrou. Un tel dispositif est par exemple décrit dans US-A-3 429 597.

Selon une conception connue, l'extrémité de l'arbre d'entraînement comporte un tronçon conique dont la surface est munie d'une série de crans adjacents en relief réalisés par moletage qui s'étendent parallèlement à l'axe, et un tronçon d'extrémité fileté.

Le tronçon conique est reçu dans un évidement de profil complémentaire, à paroi lisse, formé dans la tête d'entraînement tandis que l'extrémité filetée fait saillie au-dessus de la face supérieure de la tête d'entraînement pour être vissée dans un écrou de serrage dont la face annulaire de serrage coopère avec la face supérieure de la tête d'entraînement.

L'opération de serrage en position montée de la tête d'entraînement au moyen de l'écrou a pour effet de provoquer une pénétration des crans dans la matière constitutive de la paroi de l'évidement conique de la tête d'entraînement.

L'effort de serrage appliqué à l'écrou provoque une pénétration progressive des crans dans la tête d'entraînement qui s'impriment dans la paroi pour constituer les moyens d'entraînement en rotation de la tête d'entraînement par l'arbre moteur.

Cette conception particulièrement simple a pour inconvénient de faire varier la position axiale de la tête d'entraînement sur l'arbre moteur en fonction de la valeur de l'effort de serrage, c'est-à-dire qu'il ne permet pas de déterminer une cote précise de la tête d'entraînement par rapport à l'arbre moteur , et donc par rapport à la vitre à essuyer.

La présente invention a pour but de proposer une nouvelle conception d'un tel dispositif d'essuie-glace qui permet de remédier à cet inconvénient.

Dans ce but, l'invention propose un dispositif d'essuie-glace du type mentionné précédemment, caractérisé en ce que le logement comporte une surface radiale de butée qui coopère avec une surface radiale d'appui de l'arbre moteur pour définir une position axiale précise de la tête d'entraînement par rapport à l'arbre moteur.

Selon divers modes de réalisation de l'invention :
- la surface radiale d'appui est formée sur un épaulement de l'arbre d'appui agencé au voisinage de son extrémité libre ;
- la surface radiale de butée est une surface annulaire de butée agencée dans la face inférieure de la tête d'entraînement et qui est traversée par la portion d'extrémité libre de l'arbre moteur ;
- les moyens de serrage axial comportent un organe de serrage dont une face annulaire de serrage coopère avec une portion annulaire agencée en vis-à-vis dans la face supérieure de la tête d'entraînement ;
- la surface radiale de butée prend appui directement sur la surface radiale d'appui ;
- les moyens de liaison en rotation par coopération de formes comportent une série de dents formées sur l'extrémité libre de l'arbre moteur et qui sont réparties angulairement de manière régulière autour de l'axe de l'arbre ;
- les dents sont formées sur la surface radiale d'appui ;
- le logement est un lamage qui est formé dans la face inférieure de la tête d'entraînement et qui est percé en son centre pour le passage de l'extrémité libre de l'arbre moteur ;
- l'extrémité libre de l'arbre moteur est filetée et l'organe de serrage est un écrou ;
- les moyens de liaison en rotation comportent un élément intermédiaire de liaison en rotation reçu dans un évidement formé dans la tête d'entraînement, lié en rotation avec l'arbre moteur, traversé par l'ensemble vis-écrou, et dont la paroi externe de révolution comporte une série de dents réparties angulairement de manière régulière qui coopèrent avec la paroi en vis-à-vis de l'évidement ;
- l'évidement débouche dans la face supérieure de la tête d'entraînement et l'ensemble vis-écrou assure un serrage axial indirect de la tête d'entraînement à travers l'élément intermédiaire ;
- l'ensemble vis-écrou comporte une vis dont la tête de serrage prend appui contre l'élément intermédiaire, dont le corps traverse l'élément intermédiaire et dont l'extrémité filetée est vissée dans un taraudage formé dans l'extrémité de l'arbre moteur ;
- la tête de la vis est reçue dans la portion de plus grand diamètre d'un perçage étagé formé dans l'élément intermédiaire dont la portion de plus petit diamètre est traversée par le corps de la vis ;
- l'élément intermédiaire comporte une tête crénelée, qui s'étend axialement au-delà de ladite face annulaire d'extrémité, qui coopère avec une extrémité crénelée complémentaire formée à l'extrémité libre de l'arbre moteur pour assurer la liaison en rotation entre l'arbre moteur et l'élément intermédiaire ;
- l'évidement débouche dans la face inférieure de la tête d'entraînement et l'élément intermédiaire comporte un collet radial dont une première face annulaire est en appui contre la surface de butée formée dans la face inférieure de la tête d'entraînement et dont la seconde face annulaire est en appui contre la surface radiale d'appui de l'arbre moteur ;
- l'arbre moteur comporte successivement, en direction de son extrémité libre, un épaulement qui délimite la surface radiale d'appui, un tronçon d'entraînement en rotation de section non circulaire qui traverse un orifice central de section complémentaire formé dans l'élément intermédiaire, et un tronçon fileté prévu pour coopérer avec un écrou de serrage dont la face annulaire de serrage coopère avec la face supérieure de la tête d'entraînement.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en perspective éclatée d'un premier mode de réalisation d'un dispositif d'essuie-glace conforme aux enseignements de l'invention ;
- la figure 2 est une vue éclatée en section axiale des composants du dispositif illustré sur la figure 1 ;
- la figure 3 est une vue en section axiale du dispositif illustré en position montée et serrée ;
- la figure 4 est une vue en perspective éclatée d'un second mode de réalisation d'un dispositif d'essuie-glace conforme aux enseignements de l'invention ;
- la figure 5 est une vue en section axiale du dispositif illustré à la figure 4 dont les composants sont illustrés en position montée et serrée ; et
- les figures 6 et 7 sont des vues similaires à celles des figures 4 et 5 qui illustrent un troisième mode de réalisation d'un dispositif d'essuie-glace conforme aux enseignements de l'invention.

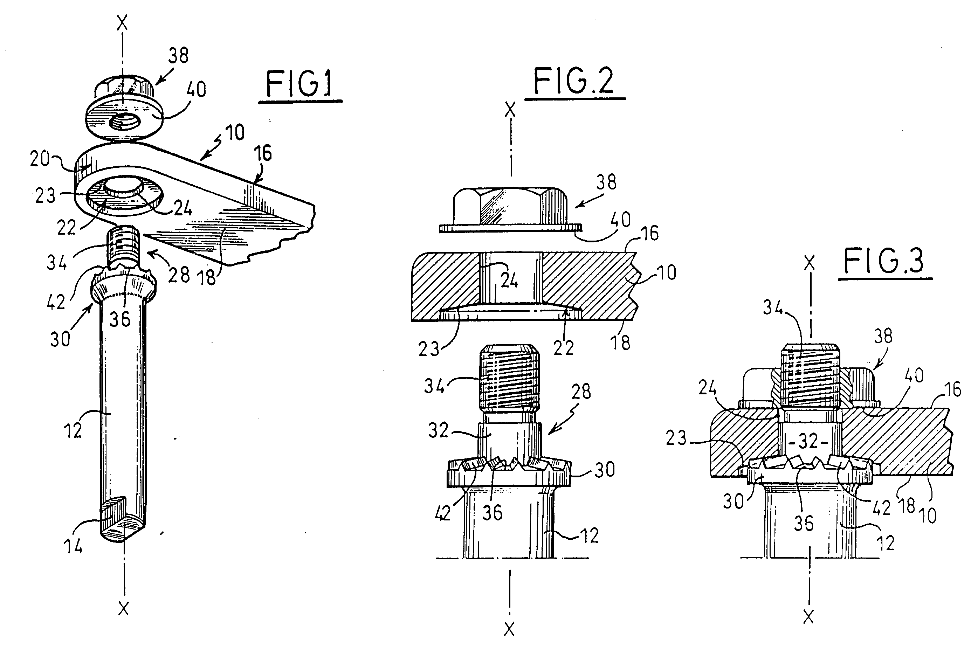

On a représenté sur la figure 1 une tête 10 d'entraînement d'un bras d'essuie-glace, non représenté, qui est monté articulé sur la tête d'entraînement autour d'un axe sensiblement perpendiculaire à l'axe X-X d'entraînement en rotation de la tête 10.

L'entraînement de la tête 10 est assuré au moyen d'un arbre rotatif moteur 12 qui comporte des moyens 14 pour son entraînement en rotation, autour de l'axe X-X, par un ensemble moto-réducteur (non représenté) sur les figures.

La tête d'entraînement est une pièce moulée en métal de forme générale allongée qui comporte des faces supérieure 16 et inférieure 18 sensiblement parallèles et planes.

Au voisinage de son extrémité arrière 20, la tête d'entraînement 10 comporte un logement 22 réalisé sous la forme d'un lamage légèrement conique formé dans la face inférieure 18 qui se prolonge par un perçage central 24 qui débouche dans la face supérieure 16 de la tête d'entraînement 10.

La portion d'extrémité libre 28 de l'arbre moteur 12 comporte successivement, verticalement du bas en haut en considérant les figures, un épaulement radial externe 30, un tronçon de liaison lisse 32 et un tronçon cylindrique d'extrémité fileté 34.

La face supérieure légèrement conique 36 de l'épaulement 30 définit, au sens de l'invention, une surface annulaire radiale d'appui qui, en position montée et serrée comme cela est illustré sur la figure 3, vient en contact avec la surface de butée constituée par le fond légèrement conique complémentaire 23 du lamage 22.

Le tronçon de liaison 32 est prévu pour passer à travers le perçage 24 tandis que le tronçon d'extrémité fileté fait saillie au-delà de la face supérieure 16 pour être vissé dans un écrou de serrage 38 dont la face annulaire inférieure de serrage 40 est prévue pour coopérer avec la portion en vis-à-vis de la face supérieure 16 qui entoure le perçage 24.

Les moyens de liaison en rotation de la tête d'entraînement 10 par l'arbre moteur 12 sont constitués par une série de dents 42 qui sont formées en relief sur la surface radiale d'appui 36.

Les dents 42 sont réparties angulairement de manière régulière autour de l'axe X-X et elles s'étendent radialement en direction de l'axe.

Chaque dent présente une section sensiblement triangulaire et les dents sont espacées l'une de l'autre par des portions en forme de secteurs angulaires de la surface radiale d'appui 36.

Après assemblage des composants et leur serrage axial au moyen de l'écrou 38, et comme cela est illustré sur la figure 3, on constate que les dents 42 ont pénétré dans la matière constitutive du fond 23 du logement 22 et que ce fond 23 est en butée axiale, entre les dents 42, contre la surface radiale d'appui 36, définissant ainsi une position axiale précise de la tête d'entraînement 10 par rapport à l'arbre d'entraînement 12, c'est-à-dire dont une cote verticale précise de la tête d'entraînement par rapport à la vitre à essuyer (non représentée).

Dans le mode de réalisation illustré sur la figure, le collet radial 30 qui délimite la surface radiale d'appui annulaire 36 et qui comporte les dents d'entraînement en rotation 42 est réalisé venu de matière par forgeage et matriçage avec le corps de l'arbre moteur 12.

Selon une variante de réalisation, non représentée sur les figures, l'épaulement 30 peut être réalisé sous la forme d'un élément intermédiaire rapporté sur l'extrémité 28 de l'arbre 12, du type de celui qui sera décrit et représenté ultérieurement en référence au troisième mode de réalisation illustré aux figures 6 et 7.

Outre la précision du positionnement axial de la tête d'entraînement 10 par rapport à l'arbre moteur 12, la conception des dents triangulaires et espacées 42 permet, en cas de démontage et de remontage, de repositionner angulairement de manière précise la tête d'entraînement par rapport à l'arbre de rotation 12 en mettant en concordance les dents 42 avec les empreintes qu'elles ont préalablement imprimées dans le fond 23 du logement 22 lors de la première opération de montage et de serrage.

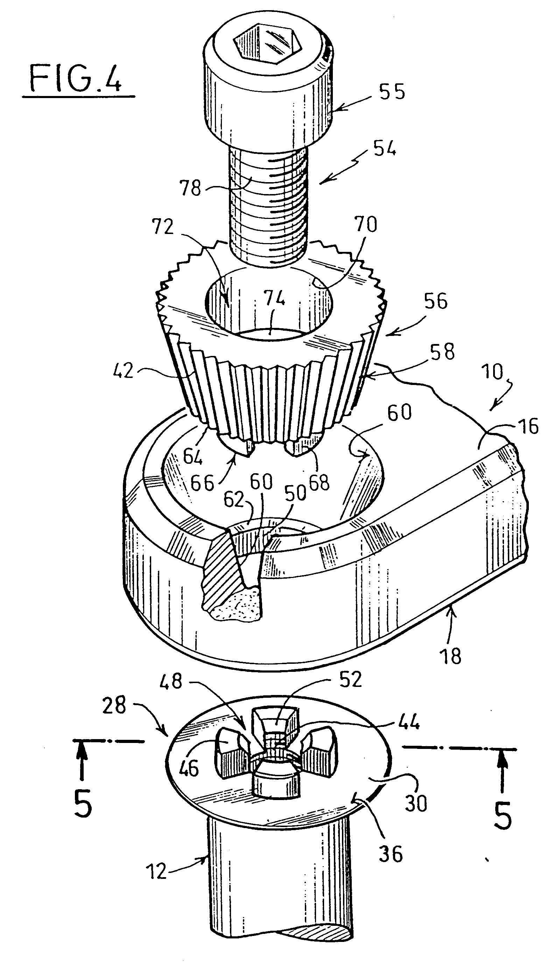

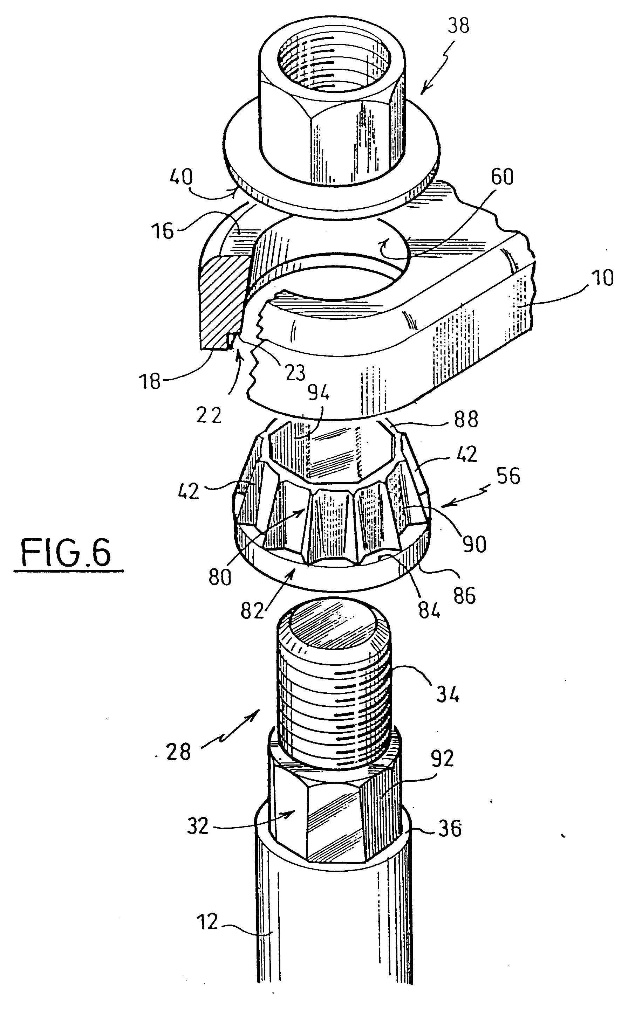

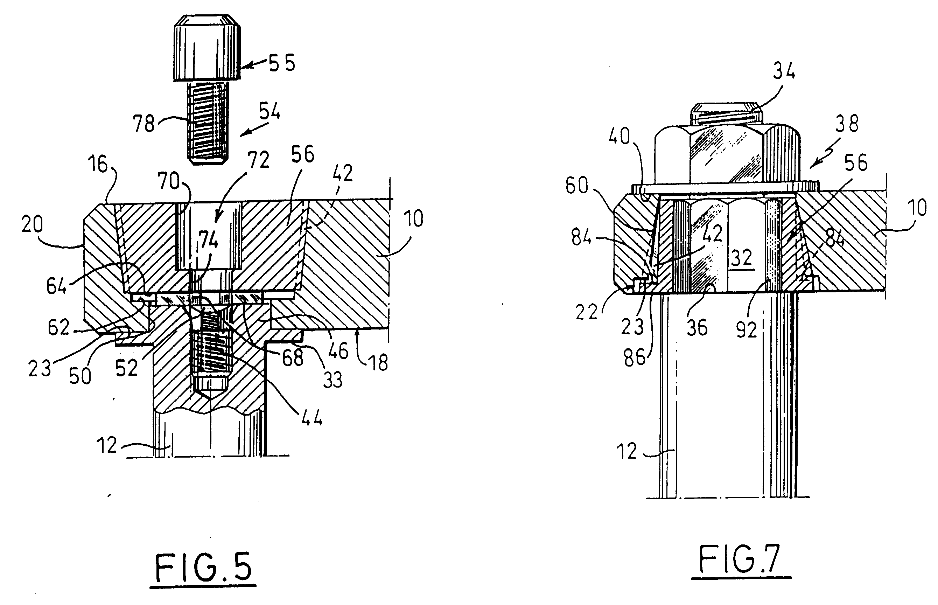

On décrira maintenant le deuxième mode de réalisation illustré aux figures 4 et 5 sur lesquelles des éléments identiques ou similaires à ceux illustrés sur les figures 1 à 3 sont désignés par les mêmes chiffres de référence.

Dans ce mode de réalisation, l'épaulement 30 de la portion d'extrémité 28 de l'arbre moteur 12 comporte une face annulaire supérieure 36 qui définit une surface radiale annulaire d'appui qui est prévue pour coopérer avec une surface radiale de butée constituée ici directement par la portion annulaire en vis-à-vis 23 de la face inférieure 18 de la tête d'entraînement 10, comme cela est illustré sur la figure 5.

La portion d'extrémité libre 28 de l'arbre moteur 12 comporte un taraudage central 44.

La portion d'extrémité comporte également quatre plots 46 répartis angulairement de manière régulière qui font saillie axialement au-delà de la surface radiale annulaire d'appui 36 et qui constituent une tête crénelée 48 qui est prévue pour être reçue dans un perçage de diamètre correspondant 50 qui débouche dans la face inférieure 18 de la tête d'entraînement 10.

Chaque plot 46 comporte un chanfrein d'entrée 52 et une portion du taraudage 44 pour faciliter l'introduction d'une vis de serrage 54.

Les moyens de liaison en rotation de la tête d'entraînement 10 avec l'arbre moteur 12 comportent un élément intermédiaire rapport de liaison en rotation 56.

L'élément rapporté 56 est une pièce massive de révolution dont la paroi externe 58 présente un profil conique dont le sommet est orienté verticalement vers le bas, en considérant les figures 4 et 5, c'est-à-dire en direction de l'arbre moteur 12.

La paroi conique 58 comporte une série de crans en relief 42 qui sont répartis angulairement de manière régulière autour de l'axe de la pièce 56 et qui s'étendent parallèlement à cet axe sur des génératrices coniques.

L'élément intermédiaire rapporté 56 est prévu pour être reçu dans un évidement de profil conique complémentaire 60 dont la paroi est à l'origine; c'est-à-dire avant le premier montage et serrage, lisse et dont le fond est constitué par une surface annulaire de serrage 62 qui délimite le trou 50 et l'évidement 60, ce dernier débouchant dans la face supérieure 16 de la tête d'entraînement 10.

L'élément intermédiaire de liaison en rotation 56 comporte une face inférieure annulaire d'extrémité 64 qui est prévue pour venir en appui axial contre la surface annulaire de serrage 62.

L'élément intermédiaire de liaison en rotation 56 comporte également une tête crénelée 66 de conception similaire à celle de la tête crénelée 48 de l'extrémité libre 28 de l'arbre moteur 12 qui s'étend axialement au-delà de la surface annulaire inférieure d'extrémité 54 pour être reçue, d'une part dans le trou 50, et d'autre part emboîtée entre les plots de la tête d'entraînement crénelée 48 de l'arbre moteur 12 avec des plots 68, pour assurer une liaison en rotation de l'élément intermédiaire 56 avec l'arbre moteur 12.

Les quatre plots 68 de la tête d'entraînement 66 sont intercalés entre les plots 46 de la tête d'entraînement crénelée 48 mais les faces axiales d'extrémité de ces plots 46 et 68 ne sont pas axialement en appui contre des portions de surface formées en vis-à-vis sur l'élément intermédiaire 56, ni sur l'extrémité libre 28 de l'arbre moteur 12.

Le serrage axial de l'ensemble est assuré au moyen de la vis 54 dont la tête 56 est reçue dans une portion de plus grand diamètre 70 d'un perçage étagé 72 formé coaxialement dans l'élément intermédiaire de liaison 56 et qui se prolonge par une portion de plus petit diamètre 74 qui permet le passage de la tige filetée 78 de la vis 56 qui est prévue pour être vissée dans le taraudage 44 formé dans l'extrémité libre de l'arbre moteur 12.

En position montée et serrée, comme on peut le voir sur la figure 5, la zone radiale annulaire de butée 23 de la face inférieure 18 de la tête d'entraînement 10 est en appui direct contre la surface radiale annulaire d'appui 36 formée sur le collet 30 de l'arbre moteur 12, assurant ainsi une position axiale relative précise de la tête d'entraînement 10 par rapport à l'arbre moteur 12 tandis que les crans 42 formés sur l'élément intermédiaire de liaison en rotation 56 ont pénétré dans la matière qui délimite la paroi conique de l'évidement 60 en y marquant leur empreinte.

L'effort de serrage appliqué à la vis 56 provoque une pénétration axiale plus ou moins importante de l'élément intermédiaire de liaison en rotation 56 dans l'évidement 60, mais ceci est sans effet sur la position axiale relative de la tête d'entraînement 10 par rapport à l'arbre moteur 12.

On décrira maintenant le troisième mode de réalisation illustré aux figures 6 et 7 sur lesquelles des éléments identiques ou similaires à ceux illustrés aux figures 1 à 5 sont désignés par les mêmes chiffres de référence.

Dans ce troisième mode de réalisation, l'appui de la surface annulaire de butée 23 formée dans un lamage inférieur 22 formé dans la face inférieure 18 de la tête d'entraînement 10 sur la surface radiale annulaire d'appui 36 formée à l'extrémité libre 28 de l'arbre moteur 12 est un appui indirect qui s'effectue à travers l'élément intermédiaire de liaison 56.

A cet effet, l'élément intermédiaire 56 est agencé dans un évidement 60 qui débouche dans la face inférieure 18 de la tête d'entraînement 10 et qui se termine par le lamage 22 définissant la surface radiale annulaire de butée 23.

L'élément intermédiaire 56 est constitué pour l'essentiel par une jupe annulaire sensiblement cylindrique 80 qui se prolonge à sa partie inférieure par un collet radial extérieur 82 qui est prévu pour être reçu dans le lamage 22 et dont la face radiale annulaire supérieure 84 est prévue pour venir en appui axial contre la surface radiale annulaire de butée 23.

La face radiale annulaire inférieure 86 du coller radial extérieur 82 est prévue pour venir en appui contre la surface radiale annulaire d'appui 36 formée sur l'extrémité libre 28 de l'arbre moteur 12.

Les dents 42 sont réparties angulairement de manière régulière de long de la paroi externe de la jupe 80 de l'élément intermédiaire de liaison 86 et elles présentent une section triangulaire allant en s'amincissant depuis le collet inférieur 42 jusqu'au bord supérieur libre 88 de la jupe 80 de manière à constituer des coins qui vont pénétrer de manière progressive dans la matière constitutive de la paroi de l'évidement 60 lors de la première opération de serrage.

Les dents 42 sont réparties régulièrement et espacées par des portions cylindriques 90 de la jupe 80.

Le serrage axial de l'ensemble est assuré au moyen d'un écrou 38 dont la face inférieure annulaire de serrage 40 coopère avec la face supérieure 16 de la tête d'entraînement 10 et qui est vissé sur l'extrémité libre filetée 34 de l'arbre moteur 12 qui fait saillie axialement au-delà de la face supérieure 16.

Lors de la première opération de montage et de serrage, l'opérateur effectue un serrage de l'écrou 38 jusqu'à ce que les dents 42 pénètrent dans la paroi de l'évidement 60 et jusqu'à ce que la surface radiale annulaire de butée 23 vienne en appui contre la face annulaire supérieure 84 du collet radial extérieur 82 de la pièce intermédiaire de liaison en rotation 56.

Une fois le serrage axial effectué, la position axiale relative de la tête d'entraînement 10 par rapport à l'arbre 12 est assurée avec précision du fait de l'appui mutuel des surfaces 23 et 84 et des surfaces 86 et 36.

La liaison en rotation entre l'élément intermédiaire 56 et la portion d'extrémité 28 de l'arbre 12 est assurée par coopération de forme complémentaire. A cet effet, le tronçon intermédiaire 32 de l'extrémité libre 28 de l'arbre moteur 12 comporte une série de méplats 92 et il est reçu à l'intérieur de la jupe 90 de l'élément intermédiaire de liaison en rotation 56 qui comporte des méplats correspondants 94.

Dans ces deux derniers modes de réalisations, et en cas de démontage de la tête d'entraînement, l'élément intermédiaire 56 reste en place dans son logement 60, et d'indexation angulaire de la tête d'entrainement 10 par rapport à l'arbre 12 est assurée par les moyens de liaison en rotation 46-68 ou 92-94 de l'élément intermédiaire 56 avec l'arbre 12.

## Revendications

1. Dispositif d'essuie-glace du type comportant un arbre moteur rotatif (12) et une tête d'entraînement (10) sur laquelle est articulé un bras d'essuie-glace, et du type comportant des moyens d'accouplement entre la tête d'entraînement (10) et l'extrémité libre (28) de l'arbre moteur (12) qui est reçue dans un logement (22, 24) formé dans la tête d'entraînement (10), qui comportent des moyens de liaison en rotation par coopération de formes (42) et des moyens de serrage axial (38, 56) comportant un ensemble du type vis-écrou, caractérisé en ce que le logement (22) comporte une surface radiale de butée (23) qui coopère avec une surface radiale d'appui (36) de l'arbre moteur (12) pour définir une position axiale précise de la tête d'entraînement (10) par rapport à l'arbre moteur (12).

2. Dispositif d'essuie-glace selon la revendication 1, caractérisé en ce que la surface radiale d'appui (36) est formée sur un épaulement (30) de l'arbre moteur (12) agencé au voisinage de son extrémité libre (28).

3. Dispositif d'essuie-glace selon l'une des revendications 1 ou 2, caractérisé en ce que la surface radiale de butée (23) est une surface annulaire de butée (23) agencée dans la face inférieure (18) de la tête d'entraînement (10) et qui est traversée par la portion d'extrémité libre (28) de l'arbre moteur (12).

4. Dispositif d'essuie-glace selon la revendication 3, caractérisé en ce que les moyens de serrage axial comportent un organe de serrage (38, 56) dont une face annulaire de serrage (40) coopère avec une portion annulaire agencée en vis-à-vis dans la face supérieure de la tête d'entraînement.

5. Dispositif d'essuie-glace selon l'une quelconque des revendications précédentes, caractérisé en ce que la surface radiale de butée (23) prend appui directement sur la surface radiale d'appui (36).

6. Dispositif d'essuie-glace selon la revendication 5, caractérisé en ce que les moyens de liaison en rotation par coopération de formes comportent une série de dents (42) formées sur l'extrémité libre (28) de l'arbre moteur (12) et qui sont réparties angulairement de manière régulière autour de l'axe (X-X) de l'arbre moteur (12).

7. Dispositif d'essuie-glace selon la revendication 6, caractérisé en ce que les dents (42) sont formées sur la surface radiale d'appui (36).

8. Dispositif d'essuie-glace selon l'une quelconque des revendications 5 à 7, caractérisé en ce que le logement est un lamage (22) qui est formé dans la face inférieure (18) de la tête d'entraînement (10) et qui est percé en son centre (24) pour le passage de l'extrémité libre (28, 32, 34) de l'arbre moteur (12).

9. Dispositif d'essuie-glace selon l'une quelconque des revendications 6 à 8, caractérisé en ce que l'extrémité libre de l'arbre moteur (12) est filetée (34) et en ce que l'organe de serrage est un écrou (38).

10. Dispositif d'essuie-glace selon la revendication 1, caractérisé en ce que les moyens de liaison en rotation comportent un élément intermédiaire de liaison en rotation (56) reçu dans un évidement (60) formé dans la tête d'entraînement (10), lié en rotation avec l'arbre moteur (12), traversé par l'ensemble vis-écrou, et dont la paroi externe de révolution comporte une série de dents (42) réparties angulairement de manière régulière qui coopèrent avec la paroi en vis-à-vis de l'évidement (60).

11. Dispositif d'essuie-glace selon la revendication 10, caractérisé en ce que l'évidement (60) débouche dans la face supérieure (16) de la tête d'entraînement (10), et en ce que l'ensemble vis-écrou (54, 44) assure un serrage axial indirect de la tête d'entraînement (10) à travers l'élément intermédiaire (56).

12. Dispositif d'essuie-glace selon la revendication 11, caractérisé en ce que l'ensemble vis-écrou comporte une vis (54) dont la tête de serrage (55) prend appui contre l'élément intermédiaire (56), dont le corps (78) traverse l'élément intermédiaire (56) et dont l'extrémité filetée est vissée dans un taraudage (44) formé dans l'extrémité (28) de l'arbre moteur (12).

13. Dispositif d'essuie-glace selon la revendication 12, caractérisé en ce que la tête (55) de la vis est reçue dans la portion de plus grand diamètre (70) d'un perçage étagé (72) formé dans l'élément intermédiaire (56) dont la portion de plus petit diamètre (74) est traversée par le corps (78) de la vis (54).

14. Dispositif d'essuie-glace selon l'une quelconque des revendications 11 à 13, caractérisé en ce que l'élément intermédiaire (56) comporte une tête crénelée (66), qui s'étend axialement au-delà d'une face annulaire d'extrémité (64) de l'élément intermédiaire (56) et qui coopère avec une extrémité crénelée complémentaire (48) formée à l'extrémité libre (28) de l'arbre moteur (12) pour assurer la liaison en rotation entre l'arbre moteur (12) et l'élément intermédiaire (56).

15. Dispositif d'essuie-glace selon la revendication 10, caractérisé en ce que l'évidement débouche dans la face inférieure (18) de la tête d'entraînement (10) et en ce que l'élément intermédiaire (56) comporte un collet radial (82) dont une première face annulaire est en appui contre la surface de butée (23) formée dans la face inférieure (18) de la tête d'entraînement (10) et dont la seconde surface annulaire (84) est en appui contre la surface radiale d'appui (36) de l'arbre moteur (12).

16. Dispositif d'essuie-glace selon la revendication 15, caractérisé en ce que l'arbre moteur (12) comporte successivement, en direction de son extrémité libre, un épaulement qui délimite la surface radiale d'appui (36), un tronçon (32) d'entraînement en rotation de section non circulaire qui traverse un orifice central de section complémentaire formé dans l'élément intermédiaire (56), et un tronçon fileté (34) prévu pour coopérer avec un écrou de serrage (38) dont la face annulaire de serrage (40) coopère avec la face supérieure (16) de la tête d'entraînement (10).

## Claims

1. A screen wiper apparatus of the type comprising a rotatable motor shaft (12) and a drive head (10) on which a screen wiper arm is articulated, and of the type including coupling means between the drive head (10) and the free end portion (28) of the motor shaft (12), which is received in a seating (22, 24) formed in the drive head (10), the coupling means comprising mating rotary coupling means (42) and axial clamping means (38, 56) consisting of an assembly of the screw and nut type, characterised in that the seating (22) includes a radial abutment surface (23) which cooperates with a radial thrust surface (36) of the motor shaft (12) so as to define a precise axial position for the drive head (10) with respect to the motor shaft (12).

2. A screen wiper apparatus according to Claim 1, characterised in that the radial thrust surface (36) is formed on a shoulder (30) of the motor shaft (12) arranged in the vicinity of its free end portion (28).

3. A screen wiper apparatus according to Claim 1 or Claim 2, characterised in that the radial abutment surface (23) is an annular abutment surface (23) which is formed in the lower face (18) of the drive head (10), and through which the free end portion (28) of the motor shaft (12) extends.

4. A screen wiper apparatus according to Claim 3, characterised in that the axial clamping means comprise a clamping member (38, 56), of which an annular clamping face (40) cooperates with an annular portion arranged in facing relationship with it in the upper face of the drive head.

5. A screen wiper apparatus according to any one of the preceding Claims, characterised in that the radial abutment surface (23) bears directly on the radial thrust surface (36).

6. A screen wiper apparatus according to Claim 5, characterised in that the mating rotary coupling means comprise a set of teeth (42) which are formed on the free end portion (28) of the motor shaft (12), and which are spaced apart circumferentially at regular intervals about the axis (X-X) of the motor shaft (12).

7. A screen wiper apparatus according to Claim 6, characterised in that the teeth (42) are formed on the radial thrust surface (36).

8. A screen wiper apparatus according to any one of Claims 5 to 7, characterised in that the seating is a socket (22) which is formed in the lower face (18) of the drive head (10), and which is pierced at its centre (24) for passage through it of the free end (28, 32, 34) of the motor shaft (12).

9. A screen wiper apparatus according to any one of Claims 6 to 8, characterised in that the free end portion of the motor shaft (12) is threaded (34), and in that the clamping member is a nut (38).

10. A screen wiper apparatus according to Claim 1, characterised in that the rotary coupling means include an intermediate rotary coupling element (56) which is received in an aperture (60) formed in the drive head (10) and which is coupled in rotation with the motor shaft (12), with the screw and nut assembly extending through it, its outer wall of revolution including a set of teeth (42) spaced apart circumferentially at regular intervals and cooperating with the wall, in facing relationship with it, of the aperture (60).

11. A screen wiper apparatus according to Claim 10, characterised in that the aperture (60) is open in the upper face (16) of the drive head (10), and in that the screw and nut assembly (54, 44) provides indirect axial clamping of the drive head (10) through the intermediate element (56).

12. A screen wiper apparatus according to Claim 11, characterised in that the screw and nut assembly comprises a screw (54), of which the clamping head (55) bears against the intermediate element (56), with its body (78) extending through the intermediate element (56) and its threaded end being screwed into a thread (44) formed in the end portion (28) of the motor shaft (12).

13. A screen wiper apparatus according to Claim 12, characterised in that the head (55) of the screw is received in the portion (70) of largest diameter of a stepped through hole (72), formed in the intermediate element (56) and having the body (78) of the screw (54) extending through its portion (74) of smallest diameter.

14. A screen wiper apparatus according to any one of Claims 11 to 13, characterised in that the intermediate element (56) has a crenellated head (66), which extends axially beyond an annular end face (64) of the intermediate element (56), and which cooperates with a complementary crenellated end (48) formed in the free end portion (28) of the motor shaft (12), so as to couple the motor shaft (12) and the intermediate element (56) together in rotation.

15. A screen wiper apparatus according to Claim 10, characterised in that the aperture is open in the lower face (18) of the drive head (10), and in that the intermediate element (56) includes a radial collar portion (82), a first annular face of which is in engagement against the abutment surface (23) formed in the lower face (18) of the drive head (10), the second annular surface (84) of the collar portion being in engagement against the radial thrust surface (36) of the motor shaft (12).

16. A screen wiper apparatus according to Claim 15, characterised in that the motor shaft (12) includes, in succession going away from its free end, a shoulder that defines the radial thrust surface (36), a rotational driving portion (32) having a non-circular cross section which passes through a central hole of complementary cross section formed in the intermediate element (56), and a threaded portion (34) which is arranged to cooperate with a fastening nut (38), the annular clamping face (40) of which cooperates with the upper face (16) of the drive head (10).

## Patentansprüche

1. Scheibenwischer in der Ausführung mit einer rotierenden Antriebswelle (12) und einem Antriebskopf (10), an dem ein Scheibenwischerarm angelenkt ist, und in der Ausführung mit Verbindungsmitteln zwischen dem Antriebskopf (10) und dem freien Ende (28) der Antriebswelle (12), das in eine im Antriebskopf (10) ausgebildete Aufnahme (22, 24) eingesetzt ist, die Mittel zur drehfesten Verbindung durch formschlüssiges Zusammenwirken (42) und Mittel zur axiale Aufklemmung (38, 56) mit einer Schrauben-Mutter-Einheit umfassen, **dadurch gekennzeichnet**, daß die Aufnahme (22) eine radiale Anschlagfläche (23) umfaßt, die mit einer radialen Auflagefläche (36) der Antriebswelle (12) zusammenwirkt, um eine präzise axiale Position des Antriebskopfes (10) im Verhältnis zur Antriebswelle (12) zu definieren.

2. Scheibenwischer nach Anspruch 1 , **dadurch gekennzeichnet,** daß die radiale Anschlagfläche (36) auf einer Schulter (30) der Antriebswelle (12) ausgebildet ist, die in der Nähe ihres freien Endes (28) angeordnet ist.

3. Scheibenwischer nach einem der Ansprüche 1 oder 2, **dadurch gekennzeichnet,** daß die radiale Anschlagfläche (23) eine ringförmige Anschlagfläche (23) ist, die in der Innenseite (18) des Antriebskopfes (10) angeordnet ist und durch die der freie Endabschnitt (28) der Antriebswelle (12) hindurchgeht.

4. Scheibenwischer nach Anspruch 3 , **dadurch gekennzeichnet,** daß die axialen Klemmmittel ein Klemmorgan (38, 56) umfassen, von dem eine ringförmige Klemmfläche (40) mit einem ringförmigen Abschnitt zusammenwirkt, der gegenüber in der Oberseite des Antriebskopfes angeordnet ist.

5. Scheibenwischer nach einem der vorangehenden Ansprüche, **dadurch gekennzeichnet**, daß die radiale Anschlagfläche (23) direkt auf der radialen Auflagefläche (36) zur Auflage kommt.

6. Scheibenwischer nach Anspruch 5 , **dadurch gekennzeichnet,** daß die Mittel zur drehfesten Verbindung durch formschlüssiges Zusammenwirken eine Reihe von Zähnen (42) umfassen, die am freien Ende (28) der Antriebswelle (12) ausgebildet und winklig gleichmäßig um die Achse (X-X) der Antriebswelle (12) verteilt sind.

7. Scheibenwischer nach Anspruch 6 , **dadurch gekennzeichnet,** daß die Zähne (42) auf der radialen Auflagefläche (36) ausgebildet sind.

8. Scheibenwischer nach einem der Ansprüche 5 bis 7, **dadurch gekennzeichnet**, daß die Aufnahme eine Einsenkung (22) ist, die in der Unterseite (18) des Antriebskopfes (10) ausgebildet ist und die in ihrer Mitte (24) eine Bohrung für den Durchgang des freien Endes (28, 32, 34) der Antriebswelle (12) aufweist.

9. Scheibenwischer nach einem der Ansprüche 6 bis 8, **dadurch gekennzeichnet**, daß das freie Ende der Antriebswelle (12) mit einem Außengewinde (34) versehen ist und daß das Klemmorgan eine Mutter (38) ist.

10. Scheibenwischer nach Anspruch 1 , **dadurch gekennzeichnet,** daß die Mittel zur drehfesten Verbindung ein Zwischenelement für die drehfeste Verbindung (56) umfassen, das in eine im Antriebskopf (10) ausgebildete Aussparung (60) eingesetzt und drehfest mit der Antriebswelle (12) verbunden ist, durch das die Schrauben-Mutter-Einheit hindurchgeht und dessen rotationssymmetrische Außenwand eine Reihe von winklig gleichmäßig verteilten Zähnen (42) umfaßt, die mit der gegenüberliegenden Wand der Aussparung (60) Zusammenwirken.

11. Scheibenwischer nach Anspruch 10 , **dadurch gekennzeichnet,** daß die Aussparung (60) an der Oberseite (16) des Antriebskopfes (10) mündet, wobei die Schrauben-Mutter-Einheit (54, 44) eine indirekte axiale Aufklemmung des Antriebskopfes (10) durch das Zwischenelement (56) bewirkt.

12. Scheibenwischer nach Anspruch 11 , **dadurch gekennzeichnet,** daß die Schrauben-Mutter-Einheit eine Schraube (54) umfaßt, deren Klemmkopf (55) an dem Zwischenelement (56) zur Auflage kommt, deren Körper (78) durch das Zwischenelement (56) hindurchgeht und deren Gewindeende in ein Innengewinde (44) eingeschraubt wird, das im Ende (28) der Antriebswelle (12) ausgebildet ist.

13. Scheibenwischer nach Anspruch 12 , **dadurch gekennzeichnet,** daß der Kopf (55) der Schraube in den mit größerem Durchmesser ausgeführten Abschnitt (70) einer gestuften Bohrung (72) eingesetzt ist, die im Zwischenelement (56) ausgebildet ist und durch deren Abschnitt mit kleinerem Durchmesser (74) der Körper (78) der Schraube (54) hindurchgeht.

14. Scheibenwischer nach einem der Ansprüche 11 bis 13, **dadurch gekennzeichnet,** daß das Zwischenelement (56) einen ausgezackten Kopf (66) umfaßt, der sich axial über eine ringförmige Abschlußfläche (64) des Zwischenelements (56) hinaus erstreckt und der mit einem formschlüssigen ausgezackten Ende (48) zusammenwirkt, das am freien Ende (28) der Antriebswelle (12) ausgebildet ist, um die drehfeste Verbindung zwischen der Antriebswelle (12) und dem Zwischenelement (56) herbeizuführen.

15. Scheibenwischer nach Anspruch 10 , **dadurch gekennzeichnet,** daß die Aussparung an der Unterseite (18) des Antriebskopfes (10) mündet und daß das Zwischenelement (56) einen radialen Bund (82) umfaßt, von dem eine erste ringförmige Fläche an der in der Unterseite (18) des Antriebskopfes (10) ausgebildeten Anschlagfläche (23) anliegt und dessen zweite ringförmige Fläche (84) an der radialen Auflagefläche (36) der Antriebswelle (12) anliegt.

16. Scheibenwischer nach Anspruch 15 , **dadurch gekennzeichnet,** daß die Antriebswelle (12) hintereinander, in Richtung ihres freien Endes, eine Schulter, die die radiale Auflagefläche (36) begrenzt, ein Drehantriebsstück (32) mit nichtkreisförmigem Querschnitt, das durch eine im Zwischenelement (56) ausgebildete mittige Öffnung mit formschlüssigem Querschnitt hindurchgeht, und ein Gewindestück (34) umfaßt, das vorgesehen ist, um mit einer Klemmutter (38) zusammenzuwirken, deren ringförmige Klemmfläche (40) mit der Oberseite (16) des Antriebskopfes (10) zusammenwirkt.
